Europäisches Patentamt

European Patent Office

Office européen des brevets

(19)

(11) Publication number: **0 067 479**
**A2**

## (12) EUROPEAN PATENT APPLICATION

(21) Application number: **82200696.1**

(22) Date of filing: **07.06.82**

(51) Int. Cl.³: **A 01 N 47/04**
**A 01 N 25/04, A 01 N 25/24**

(30) Priority: **08.06.81 US 271715**

(43) Date of publication of application:
**22.12.82 Bulletin 82/51**

(84) Designated Contracting States:
**AT BE CH DE FR GB IT LI NL SE**

(71) Applicant: **STAUFFER CHEMICAL COMPANY**

**Westport Connecticut 06880(US)**

(72) Inventor: **Simons, Richard William**
**319 Violet**
**Hercules California 94547(US)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) N-((trichloromethyl)thio)-4-cyclohexene-1,2-dicarboximide containing composition, a process for treating seeds with said composition, as well as the treated seeds.

(57) A seed dressing flowable composition comprising N-[(trichloromethyl)thio]-4-cyclohexene-1,2-dicarboximide, polyvinyl alcohol, Rhodamine dye and water, and optionally other ingredients, as well as seed treated with said composition.

EP 0 067 479 A2

N-[(trichloromethyl)thio]-4-cyclohexene-1,2-dicarboximide, a process for treating seeds with said composition, as well as the treated seeds.

---------------------------------------------------------------

## BACKGROUND OF THE INVENTION AND PRIOR ART.

For a number of years fungicides, particularly contact fungicides, have been used to treat seeds for the control of seed-borne pathogens and seedling diseases. Such fungicides are applied to protect seeds and young seedlings against attack by fungi present in the soil, fungi whose spores are borne on the seed surfaces, and additionally, against dormant mycelium contained within the seed. Among the fungicides which have been used for this purpose is the fungicide Captan, N-[(trichloromethyl)thio]-4-cyclohexene-1,2-dicarboximide, which has been utilized in various physical forms, including the form of flowable compositions. The latter are concentrated formulations containing Captan and water (in which Captan is basically insoluble), together with various additives such as thickening agents, surfactants, and a dye, such as Rhodamine B. This dye, sold under various trade names, is also known as tetraethylrhodamine, having the chemical name N-[9-(2-carboxyphenyl)-6-(diethylamino)-3H-xanthen-3-ylidene]-N-ethanaminum chloride, and bears the Color Index descriptions Basic Violet 10 and C.I. No. 45170.

## Summary of the invention

The purpose of this invention is to provide a new, improved, flowable composition containing Captan for use as a seed dressing.

In general, the invention comprises a flowable, water-based composition for protecting seeds against attack by fungi, comprising (by weight):

from about 35 to about 45% of N-[(trichloromethyl)thio]-4-cyclohexene-1,2-dicarboximide (hereinafter Captan);

from about 2 to about 5% polyvinyl alcohol;

from about 0.25 to about 2.0% Rhodamine B dye; and

from about 30 to about 60% water.

Preferred forms of the above composition contain, in addition, by weight up to about 8% of a freeze-point depressant such as ethylene glycol, from about 0.3 to about 1.5% of one or more thickeners, and up to about 7% of a nonionic surfactant. A more preferred composition additionally contains up to about 0.05% of a defoamer or anti-foaming agent and from about 0.2 to about 1.0 weight percent of acetic acid (preferably glacial acetic acid), which serves to neutralize bases such as calcium carbonate which may be contained as impurities in the technical grade Captan. In addition, compositions according to this invention will generally also include several weight percent of Captan derivatives, which may themselves possess fungicidal activity, and various impurities, all of which may be present if technical grade Captan is employed in preparing the composition.

The above compositions, when applied to seeds in a conventional manner, result in the production of a water-soluble film which binds the Captan onto the seed. Such a film reduces dusting off of the Captan from the seed, which, in addition to being an efficient use of the fungicide, also improves the workplace environment by maintaining the dust at a low level. Additionally, the water-soluble film makes the cleaning of the application equipment relatively simple.

The use of the dye in the amount specified, which is higher than is customarily used in such compositions, enables the dye, in addition to serving as a coloring agent for the seed (to prevent its being inadvertently used as foodstuff), to also function as a dispersant for the formulation on the seed. In a preferred formulation, the dye penetration into the skin of the seed is enhanced by the use of a freeze-point depressant such as ethylene glycol.

A composition such as provided herein has been found particularly effective in treating corn seeds for protection against the fungi mentioned above. In addition, it is also suitable for treatment of other seeds for which Captan has been utilized in the past, such as sorghum, soybeans, rice, peas, potatoes and cotton seeds.

In its most preferred form, the composition will contain the following components, listed by approximate weight percent:

Captan (pure) - 36-39 weight% (39-44.5 weight% as technical grade Captan)

polyvinyl alcohol - 2-5%

methyl cellulose (thickener) - 0.10-0.30%

attapulgite clay (thickener) - 0.25-1.0%

anti-foaming agent - 0.0-0.05%

poly(oxypropylene) block polymer with poly(oxyethylene) (nonionic surfactant) molecular weight 1800-16,000 - 0.0-7.0%

glacial acetic acid - 0.2-1.0%

Rhodamine B (Extra 500%) dye, -0.25-2.0%

ethylene glycol - up to 8%

water - remainder

Preferably both the polyvinyl alcohol and the methyl cellulose are used in the form of aqueous solutions, the polyvinyl alcohol being in approximately 20% solution and methyl cellulose in approximately 2% solution. The Rhodamine B dye is preferably incorporated into the composition as a slurry in ethylene glycol.

In general, formulated compositions as defined herein are produced by the conventional techniques utilized for manufacture of aqueous flowable concentrates of solid water-insoluble pesticides. A wet-milling technique, preferably ball-milling, is employed to mix the solid Captan and other solid components with the water and the majority of the liquid components. The exact order of this addition of the ingredients is not critical to the proper manufacturing of these compositions, with the exception that the dye, which is added as a slurry in the ethylene glycol freeze-point depressant, should not be added until the ball-milling has been completed and foam has coalesced.

In a preferred embodiment, aqueous solutions of the polyvinyl alcohol and methyl cellulose are first prepared (preferably 20% and 2%, respectively), and then mixed with water, Captan, and attapulgite clay in an agitated vessel, with the temperature being maintained at about 65°C. The anti-foaming agent and acetic acids are added at this point, and then the mixture is transferred to a wet-mill, preferably a ball mill, and mixed until the desired particle size has been achieved. Subsequently, the mixture from the ball mill is transferred to an agitated vessel, and the surfactant is added, followed by an ethylene glycol slurry of the dye. The mixture if then stirred until uniformly colored and homogeneous.

Compositions prepared according to this invention are used to treat seeds by dilution with water to a concentration of active ingredients of from about 6 to about 12 weight %, then contacted with the seeds prior to sowing, in an appropriate mixing apparatus. The seeds so treated will contain in the coating, between about 450 and about 750,000 ppm by weight of Captan (based on the weight of the seed), depending on the ratio of the amount of the dilute composition used to this amount of seed, and the type of seed treated.

A composition was prepared as above, containing (by weight) 41.24% Captan (technical grade), 10% polyvinyl alcohol (2% PVA in 20% aqueous solution), 10% methyl cellulose (0.2% in 2% aqueous solution), 0.50% attapulgite clay, 0.05% anti-foam agent, 0.71% glacial acetic acid, 5.0% nonionic surfactant, 10% rhodamine dye/ethylene glycol (20% dye slurry in glycol) and the remainder, water, was diluted to a concentration of 7.7 weight% Captan, and used to treat corn seeds prior to germination. The seeds contained 560 ppm by weight of Captan. Seedlings produced from these treated seeds were found to have an even development and a good deep green color, with no development of fungi around the treated seeds. In a control, untreated corn seeds were similarly germinated. These seedlings were uneven in development, possessed a light green color, were not as tall or sturdy as the treated seeds, and in many cases evidence of fungal development was noticed.

CLAIMS

1.        A flowable water-based composition for protecting seeds against attack by fungi comprising (by weight):

from about 35 to about 45% of N-[(trichloromethyl) thio]-4-cyclohexene-1,2-dicarboximide;

from about 2 to about 5% polyvinyl alcohol;

from about 0.2 to about 2.0% Rhodamine B dye; and

from about 30 to about 60% water, providing the total must always add up to 100% by weight.

2.        A composition according to claim 1 further comprising up to about 8% of a freeze-point depressant.

3.        A composition according to claim 2 in which the freeze-point depressant is ethylene glycol.

4.        A composition according to claim 2 further comprising from about 0.3 to about 1.5% of a thickener; up to about 7% of a nonionic surfactant; up to about 0.05% of an anti-foam agent; and from about 0.2 to about 1.0% acetic acid.

5.        A composition according to claim 1 comprising from about 36 to about 39% of the dicarboximide.

6.        A process for treating seeds to protect against attack by fungi comprising a composition according to claim 1 with water to a concentration of the dicarboximide of between about 6 and about 12 weight%, and applying said diluted composition to said seed.

7.        A process according to claim 6 employing a composition according to claim 4.

8.        Seed treated with a composition according to claim 1 which, prior to treatment, is diluted with water to produce a dilute composition having a concentration of the dicarboximide of between about 6 and about 12 weight%, and wherein the seed, after treatment, contains between about 450 and about 750,000 ppm by weight of the dicarboximide.